# EUROPEAN PATENT SPECIFICATION

(11) **EP 4 300 235 B1**
(45) Date of publication and mention of the grant of the patent: **23.04.2025**
(21) Application number: 22182553.2
(22) Date of filing: 01.07.2022
(51) Int. Cl.: G05D 1/00, B63B 79/40

(54) **METHOD TO AUTOMATICALLY NAVIGATE AND CONTROL A MARINE VESSEL**
VERFAHREN ZUR AUTOMATISCHEN NAVIGATION UND STEUERUNG EINES WASSERFAHRZEUGES
PROCÉDÉ DE NAVIGATION ET DE COMMANDE AUTOMATIQUES D'UN NAVIRE MARIN

(43) Date of publication of application: 03.01.2024
(73) Proprietor: Volvo Penta Corporation, 405 08 Göteborg (SE)
(72) Inventor: HOFF, Johan, 430 85 Brännö (SE)
(74) Representative: Zacco Sweden AB

(56) References cited:
- US-A1- 2012 290 200
- US-A1- 2020 017 177
- US-A1- 2021 221 485

## Description

### TECHNICAL FIELD

The present disclosure relates to a method to automatically navigate and control a marine vessel, a vessel navigable in this manner and a computer program comprising program code means for performing the method.

### BACKGROUND

When navigating vessels, GPS systems are increasingly used to create and use waypoints when travelling between known locations. A waypoint is a predetermined geographical position that is defined in terms of latitude/longitude coordinates. Each waypoint represents an intermediate point or place on a route or line of travel, a stopping point or a point at which course is changed. Waypoints can be marked on a computer mapping program and uploaded to a GPS receiver or navigator unit, marked on the device's own internal map, or entered manually on the device as a pair of coordinates.

The use of waypoints means that the vessel will travel in a straight line between waypoints, which can create a number of problems. The use of waypoints is not practical when the vessel travels along a complex route involving multiple changes of course and/or speed, as the number of waypoints increases significantly with the complexity of the desired route. Also, the operator may need to check that the plotted route between each waypoint does not intersect a shoal or pass too close to a navigational marker. Further, when the plotted route follows a shipping lane it is often desirable to keep the vessel to one side of the lane. This must also be checked by the operator.

US 2021/221485 A1 discloses systems and methods for autonomous docking of a vessel in a harbour.

US 2012/290200 A1 discloses an electronic device for a marine vessel that presents location information to the vessel operator.

US 2020/017177 A1 discloses systems and methods for controlling a marine vessel.

The object of the invention is to provide an improved method for navigating a vessel that solves the above problems.

### SUMMARY

In the subsequent text, the term "fairway" is intended to describe shipping zones which delineate activities and regulations for marine vessel traffic. Traffic lanes define specific traffic flow, while traffic separation zones assist opposing streams of marine traffic. Precautionary areas represent areas where ships must navigate with caution, and shipping safety fairways designate where artificial structures are prohibited. Recommended routes are predetermined routes for shipping adopted for reasons of safety. Areas to be avoided are within defined limits where navigation may be difficult. Datasets representing a fairway can be downloaded as a dataset onto a suitable storage device in a navigator unit. The term "boundary" is used for indicating the outer limit of a fairway. The location of the outer boundaries delimiting a fairway will vary depending on the current draft of the hull of a vessel. The draft "or draught) of a ship's hull is the vertical distance between the waterline and the bottom of the hull (keel). The draft of the vessel is the maximum depth of any part of the vessel, including appendages such as rudders, propellers and drop keels if deployed. The draft determines the minimum depth of water required for safe navigation of a ship or vessel. It is common practice to add a safety margin onto the draft, where the size of the safety margin depends on the size of the vessel. The term "lateral position" is intended to describe the position of the vessel relative to a reference line of the fairway. The reference line can be the centreline of the fairway or an outer boundary (left or right) of the fairway and will be specified for each example. In this context, directional terms such as "left"/"right" or "front"/"rear" are intended to indicate directions relative to the heading of a vessel travelling in a fairway.

According to one aspect, the disclosure relates to a method to automatically navigate and control a marine vessel comprising a navigator unit and propulsion system. The method involves the steps of:
- an operator selecting a desired destination for the navigator unit;
- retrieving fairway data for at least one fairway between a current position and the requested destination, which at least one fairway has a centreline and/or a pair of outer boundaries;
- the operator selecting a desired lateral position of the vessel within the at least one fairway to be travelled;
- calculating a route to reach the desired destination in the navigator, using the desired lateral position of the vessel within the at least one fairway; and
- controlling the propulsion system to reach the destination using the navigator unit.

According to a first example, the lateral position within the fairway is determined by the operator selecting which side, or lane of the fairway to follow. Which side (port or starboard) of the fairway to follow is as a rule determined by national legislation and/or local regulations. The operator also selects a lateral distance from a corresponding outer boundary of the fairway on the selected side of the centre of the fairway. In this example, the outer boundary of the selected lane is used as a reference line. The navigator unit will then calculate a route to reach the desired destination. If the selected distance between the desired lateral position and the outer boundary exceeds the distance between the centre of the fairway and the outer boundary at any point along the calculated route, then a warning is issued to the operator. This situation can occur if the width of the fairway and/or the selected lane varies along the calculated route. Variations in fairway or lane width are known from the retrieved fairway data. In addition to warning the operator, the vessel can be controlled to prevent it from crossing the centre of the fairway into the opposite lane when a deviation from the selected lateral position occurs. When the fairway data includes a centreline then this is used to define the centre of the fairway. If the fairway data does not include data for the centreline, then data determining the positions of the respective lanes of the fairway can be used to determine the centre of the fairway.

In operation, the vessel will travel along the fairway in the lane between the centre of the fairway or its centreline and the reference line at a set distance from the selected reference line unless an obstacle is detected, until a new instruction is issued by the operator, or until the destination is reached. In this context, the centreline is defined by a series of coordinates along the fairway and is as a rule available from the fairway data. The centre of the fairway is used when centreline data is not available and is an estimated series of position separating the lanes in a fairway. The centre of the fairway is often, but not necessarily located at half the width of the fairway.

According to a second example, the lateral position within the fairway is determined by the operator selecting which lane, or side of the centreline of the fairway to follow. The operator also selects a lateral distance from the centreline of the fairway. In this example, the centreline is used as a reference line. The navigator unit will then calculate a route to reach the desired destination. If the selected distance between the desired lateral position and the centreline exceeds the distance between the centreline and the outer boundary of the selected lane at any point along the calculated a route, then a warning is issued to the operator. If the fairway data does not include data for the outer boundaries, then depth contour data can be used to delimit the width of the fairway. A warning can then be issued to the operator if the desired lateral distance brings the vessel too close to a minimum depth contour that is too shallow for the draft of the vessel.

This situation can occur if the width of the fairway and/or the selected lane varies along the calculated route. Variations in fairway or lane width are known from the retrieved fairway data. In addition to warning the operator, the vessel can be controlled to prevent it from crossing an outer boundary or a predetermined minimum depth contour to avoid leaving the lane when a deviation from the selected lateral position occurs. The predetermined minimum depth contour is determined by the current draft of the vessel.

In operation, the vessel will travel along the fairway in the lane between the centreline or the centre of the fairway and the boundary at a set distance from the boundary used as a reference line unless an obstacle is detected, until a new instruction is issued by the operator, or until the destination is reached.

In the above examples, the method can further involve selecting a minimum desired depth and continuously monitoring depth contours of the fairway while following the calculated route. The minimum desired depth is selected to exceed the current draft of the vessel. The current vessel draft is either a known value supplied manually to the navigator unit by the operator, or a measured value monitored by a suitable on-board sensor or detecting unit. Preferably the minimum desired depth is selected to correspond to the current draft of the vessel plus a distance providing a predetermined safety margin below the keel. In operation, the method involves controlling the vessel to deviate from the predetermined lateral position within the fairway if the depth indicated by the detected depth contour data along the calculated route is less than the minimum desired draft.

Alternatively, the method can involve selecting a minimum desired depth, calculating a route using depth contour data from the retrieved fairway data. The fairway depth contours are known from the retrieved fairway data. The minimum desired depth is selected to exceed the current draft of the vessel. The current vessel draft is either a known value supplied manually to the navigator unit by the operator, or a measured value monitored by a suitable on-board sensor or detecting unit. Preferably the minimum desired depth is selected to correspond to the current draft of the vessel plus a distance providing a predetermined safety margin below the keel. In operation, the method involves controlling the vessel to deviate from the predetermined lateral position within the fairway if required by the retrieved depth contour data and the minimum desired draft.

In both the above alternatives, the method can involve allowing the vessel to cross the centreline or the centre of the fairway if the depth indicated by the detected or the retrieved depth contour data is less than the minimum desired depth.

In general, the navigator unit can use detected or manually input vessel draft data for calculating the route in order to automatically navigate and control the marine vessel.

According to a third example, if it is determined that fairway data is unavailable for a section of the calculated route the method involves setting a minimum desired depth, manually or automatically, and retrieving depth data from an on-board and/or off-board source. The on-board source can be a data storage unit comprising local chart data or historic depth data from a previous trip. The off-board source can be a marine chart database from which depth data can be acquired via internet or a similar a wireless connection. The vessel can then be controlled to follow the calculated route across said section towards a subsequent fairway along the calculated route. The vessel can be controlled to deviate from the calculated route if required by the depth data from the on-board and/or off-board source.

According to a second aspect, the invention relates to a marine vessel comprising a navigator unit and propulsion system, which vessel is operated using the method according to any one of the above examples or alternatives.

According to a third aspect, the invention relates to a computer program comprising program code means for performing the method according to any one of the above examples or alternatives when said program is run on a computer.

According to a third aspect, the invention relates to a computer program product comprising program code means stored on a computer readable medium for performing the steps of the method according to the invention for controlling a marine vessel comprising a navigator unit and propulsion system when said program product is run on a computer.

According to a fourth aspect, the invention relates to a computer program product comprising program code means stored on a computer readable medium for performing the method according to any one of the above examples or alternatives when said program product is run on a computer.

The above-mentioned method allows the vessel to travel along a complex route involving multiple changes of course and/or speeds without the operator having to plot numerous waypoints. The use of retrieved fairway data allows to operator to select a desired lateral position for the vessel within a lane in a fairway, where after a navigator unit calculates a route to be followed automatically. In addition, the operator does not need to check that the calculated route intersects a shoal or pass too close to a navigational marker, as this data is available from the retrieved fairway data. The method alleviates the workload for the operator by eliminating the need for plotted waypoints and additional checks for shoals or markers. This allows the operator to concentrate on the surroundings and nearby vessels.

### BRIEF DESCRIPTION OF THE DRAWINGS

In the following text, the invention will be described in detail with reference to the attached drawings. These schematic drawings are used for illustration only and do not in any way limit the scope of the invention. In the drawings:
- Figure 1: shows a schematically indicated vessel controllable by a navigator unit;
- Figure 2: shows a first schematic chart with a fairway to be travelled by a vessel;
- Figure 3: shows a second schematic chart with a fairway to be travelled by a vessel;
- Figure 4: shows a third schematic chart with a fairway to be travelled by a vessel; and
- Figure 5: shows the invention applied on a computer arrangement.

### DETAILED DESCRIPTION OF EXAMPLE EMBODIMENTS OF THE INVENTION

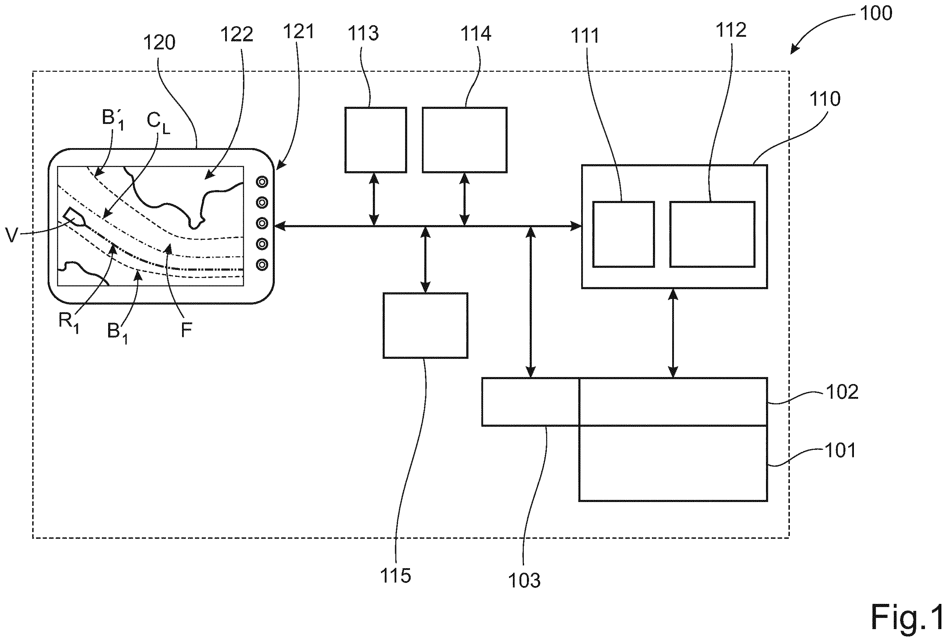

Figure 1 shows a schematically indicated vessel 100 controllable by a navigator unit 120. The vessel 100 in Figure 1 shows a system for controlling position and speed of the vessel 100, which is propelled by a marine propulsion device 101 along a route R₁ along a fairway F displayed on a user interface 120. An input means 121 on the user interface 120, shown here as a chart plotter, allows an operator to input data such as a desired destination or vessel draft. The input means 121 can be a set of buttons or an interactive touch-sensitive screen, or an external device such as a smart phone, tablet or a PDA. The user interface 120 renders a screen 122 on which a route R₁ and a vessel location V is shown. The screen 122 also renders a map, which shows the different bodies of water and land in the general geographical area in which the marine vessel 100 is currently operating.

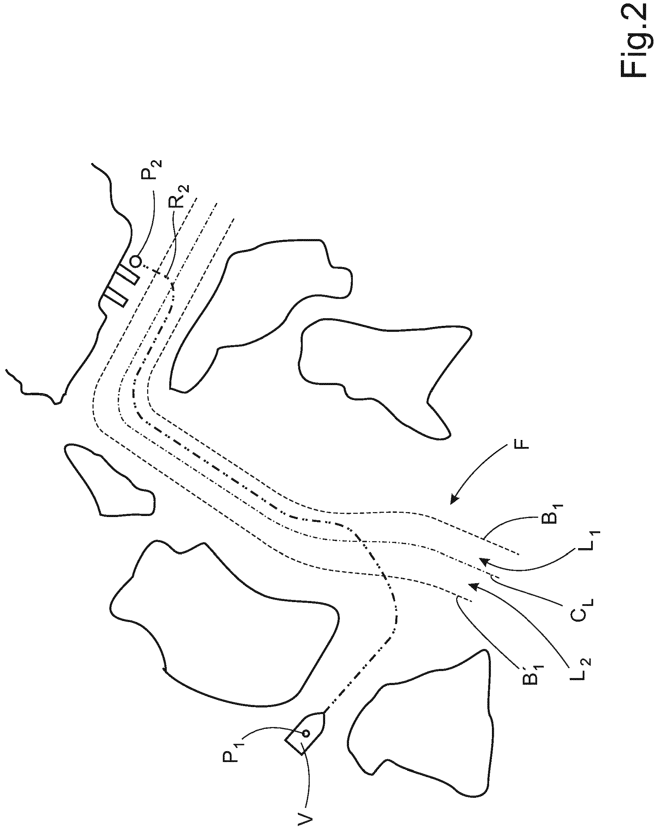

According to the present disclosure, the input means provides at least a desired destination to the controller 110. Additional input data can include a desired speed of the marine propulsion device 101 and the current draft of the vessel, if not available from a sensor 115 such as sonar or a similar suitable device. The controller 110 can download fairway data from an external database or server, which data can contain navigational data required for following the fairway as well as depth contours along the fairway. In the examples given below it has been assumed that the downloaded fairway data contains data for both a centreline and outer boundaries for the fairway. As indicated above, it can occur that the fairway data will contain data for either a centreline or the outer boundaries for the fairway. In the latter case, the basic principles for calculating a route are still valid although data relating to fairway lanes or depth contour can be used to supplement missing data. The user interface 120 renders the above-mentioned screen 122 to display the fairway on a map, whereby an operator of the marine vessel 100 can select which side of a centreline C_{L} to travel along the fairway F and a desired lateral distance from a reference line (see Fig.2).

The operator can select either the centreline C_{L} or the outer boundary B₁, B'₁ as a reference line. Based on the fairway data and the input data from the operator, the controller 110 calculates a route R₁ in a lane associated with the selected side of the fairway, at a desired distance from the selected reference line.

In the example where the input source is a separate user interface 120 communicating with the controller 110 via a wired connection, a network connection or a drive or other storage device communicating with the controller 110 via a USB or similar port. The operator can also input geographical coordinates and associate them with respective desired speeds, and this data can then be saved on a remote computer or on a storage device for later uploading to the controller 110. In one example, the desired speed of the marine propulsion device 101 is the speed of the marine vessel 100, which may be defined in units of miles per hour, knots, or any other velocity value. In another example, the desired speed of the marine propulsion device 101 is a speed of an engine 102 powering the marine propulsion device 101 and may be expressed in units of rotations per minute (RPM).

The system further includes a position determination device 114 (e.g. GPS receiver) that determines an actual geographical location of the marine vessel 100. The position determination device 114 could alternatively be a compass, an inertial measurement unit (IMU), or a differential GPS receiver. The controller 110 also receives the actual geographical location from the position determination device 114. The system also includes a speed sensor 113 that determines an actual speed of the marine propulsion device 101. In the example where the desired speed is a vessel speed, the speed sensor could be a vessel speed sensor 113 such as a paddle wheel or a pitot tube attached to the marine vessel 100. Alternatively, a measurement of speed over ground (SOG) could be determined by the position determination device 114. In the example where the desired speed is a speed of the engine 102, the speed sensor is an engine speed sensor 103 such as, for example, a tachometer.

The controller 110 can incorporate both an autopilot system 111 and a cruise control system 112. The autopilot system 111 can be used to control the steering position of the propulsion device 101. The cruise control system 112 can be used to compare the actual and desired speeds (vessel speeds or engine speeds) and send commands to the throttle valve of the engine 102 in order to achieve the desired speed. This can be done according to known feedback algorithms, such as PID control algorithms.

The controller 110 compares the actual geographical location to the position relative to the calculated route R1, and outputs commands to propel the marine vessel 100 to follow the route and concurrently to operate the marine propulsion device 101 at a set or desired speed. The controller achieves this by sending commands to the engine 102 of the propulsion device 101, as well as to any type of steering mechanism provided on the marine vessel 100, such as to the propulsion device 101 itself or to a suitable rudder (not shown). If the desired speed is a vessel speed, the controller 110 may command a throttle valve of the engine 102 to open or close incrementally as controlled by a feedback loop until the desired vessel speed is reached. In the example where the desired speed is an engine speed, the controller 110 may command the throttle valve to open or close to a calibrated position that is predicted to achieve the desired engine speed.

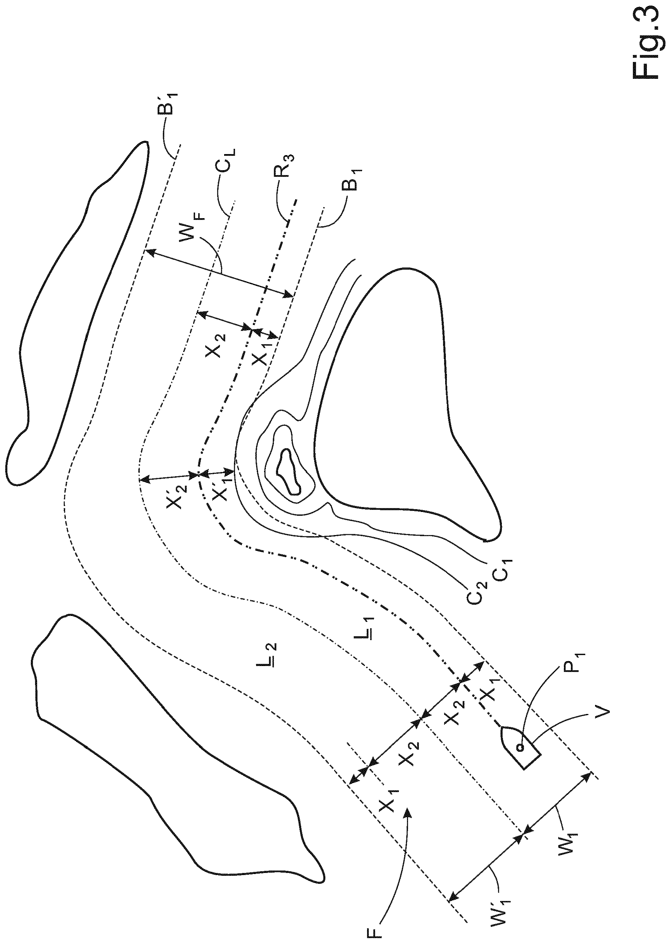

Figure 2 shows a first schematic chart with a fairway to be travelled by a vessel. In Figure 2, a vessel V at a position P₁ is approaching a fairway F along which an operator wishes to travel from the current position P₁ to a destination at a second position P₂. In order to achieve this, the operator selects the desired destination at the second position P₂ for a navigator unit (see Fig.1). The navigator unit retrieves fairway data for the fairway F between a current position P₁ and the requested destination P₂. The navigator unit will display a map on a screen (see Fig.1) indicating the fairway F, its centreline C_{L} and a pair of outer boundaries B₁, B₁' for corresponding lanes L₁, L₂, one on each side of the centreline C_{L}. The outer boundaries B₁, B₁' indicate the outer perimeters of each lane L₁, L₂. Inside the boundaries a minimum depth can be ensured, even at low tide. Outside the boundaries travel can be restricted by fairway markers, buoys, shoals, sand banks or by local regulations or restrictions for marine vessels. In this case it has been assumed that the navigator unit has been provided with necessary information about the vessel, such as the draft of its hull. Using depth contour data from the retrieved fairway data the navigator unit will display a map indicating the outer boundaries B₁, B₁' of the fairway F suitable for the current draft of the vessel V. The operator can then select a desired lateral position of the vessel relative to a reference line within the fairway F. This procedure will be described in connection with Figure 3 below.

Figure 3 shows a second schematic chart with a fairway F to be travelled by a vessel V. Once the operator has selected a destination the navigator unit determines the current vessel position P₁ and retrieves the required fairway data between this position and the destination. As described above, the navigator unit will display a map on a screen (see Fig.1) indicating the fairway F, its centreline C_{L} and a pair of outer boundaries B₁, B₁' for corresponding lanes L₁, L₂, one on each side of the centreline C_{L}.

The operator can then select a desired lateral position X₁; X₂ of the vessel relative to a reference line within the fairway F to be travelled. In the example shown in Figure 3, the operator has selected to travel in the right-hand lane L₁. If the boundary B₁ is selected as a reference line, then the operator selects a desired lateral position X₁ of the vessel inside the boundary B₁. If the centreline C_{L} selected is selected as a reference line, then the operator selects a desired lateral position X₂ of the vessel from the centreline C_{L}. Using the retrieved fairway data, known vessel data and data input by the operator relating to the desired lateral position X₁; X₂ within the selected lane L₁ of the fairway F, the navigator unit calculates a route R₃ to reach the desired destination. The navigator unit will then issue signals to control the propulsion system as well as a steering mechanism if provided, to reach the selected destination.

At the current position P₁, the selected lane L₁ has a width W₁. As indicated in Figure 3, the fairway width W_{F} is equal to the sum of the lane widths W₁, W'₁. Due to obstacles or local depth contours C₁, C₂ along the fairway, the fairway width W_{F} may vary. As indicated in Figure 3, a shoal indicated by depth contours C₁ and C₂ causes a reduction of the width W₁ of the selected lane L₁. In this example, the draft of the vessel allows it to cross the depth contour C₂ but not depth contour C₁ whereby the outer boundary B₁ of the selected lane L₁ cannot be allowed to intersect the relatively shallower depth contour C₁.

If the boundary B₁ has been selected as a reference line the vessel V will travel along the route R₃ at the desired lateral position X₁ from the boundary B₁ past the section with a reduced fairway width W_{F}. This means that the distance X'₂ from the centreline C_{L} will be reduced. However, lateral position X₁ from the boundary B₁ cannot exceed the width of the lane L₁ at this point in order to prevent the vessel from moving into the opposite lane L₂.

If the centreline C_{L} has been selected as a reference line the vessel V will travel along the route R₃ at the desired lateral position X₂ from the centreline C_{L} past the section with a reduced fairway width W_{F}. This means that the distance X'₁ from the boundary B₁ will be reduced. However, lateral position X₂ from the centreline C_{L} cannot exceed the width of the lane L₁ at this point in order to prevent the vessel from moving outside the boundary B₁.

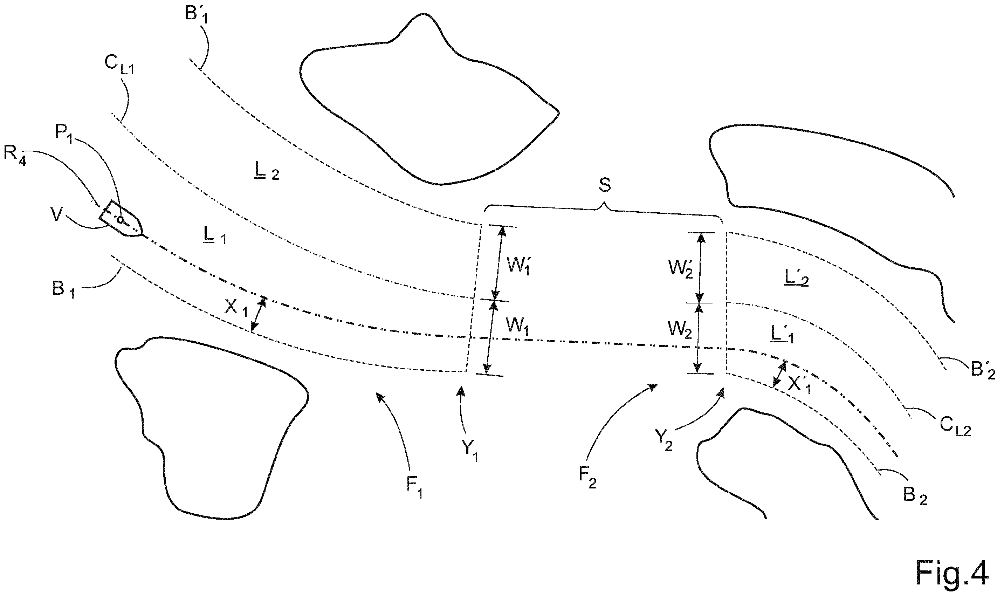

Figure 4 shows a third schematic chart with a fairway to be travelled by a vessel V. As described above, when the operator has selected a destination the navigator unit determines the current vessel position P₁ and retrieves the required fairway data between this position and the destination. The navigator unit will display a map on a screen (see Fig.1) indicating the fairway. In this example it has been determined that fairway data is unavailable for a section S of the calculated route R₄. Hence the navigator unit will display two consecutive fairways F₁, F₂, their respective centrelines C_{L1}, C_{L2} and outer boundaries B₁, B'₁; B₂, B'₂ for the corresponding lanes L₁, L₂; L'₁, L'₂. The respective lanes L₁ and L₂ of the first fairway F₁ have lane widths W₁ and W'₁, respectively. Similarly, the respective lanes L'₁ and L'₂ of the second fairway F₂ have lane widths W₂ and W'₂, respectively.

In this example the operator has selected to travel in the right-hand lane L₁ of the first fairway F₁. The boundary B₁ has been selected as a reference line and the operator has selected a desired lateral position X₁ of the vessel inside the boundary B₁. The navigator unit will then calculate a route R₄ towards the desired destination and issue signals to control the propulsion system as well as a steering mechanism if provided, to reach the selected destination.

When the vessel V approaches the end point Y₁ of the first fairway F₁ the navigator unit will where determine that fairway data is unavailable for a section S of the calculated route R₄ between the first and second fairways F₁, F₂. The navigator will then set a minimum desired depth, which exceeds the current draft of the vessel, and retrieve depth data from an on-board and/or off-board source. Subsequently the navigator unit will control the vessel to follow the calculated route R₄ towards a start point Y₂ of the subsequent second fairway F₂. The vessel is allowed to deviate from the calculated route R₄ temporarily if required by the depth data.

Once the vessel V reaches the second fairway F₂ it will continue to travel in the right-hand lane L'₁ of the second fairway F₂. The boundary B₂ of this lane L'₁ will be used as a reference line and the lateral position X'₁ will be equal to the initially selected desired lateral position X₁, unless the position is updated by the operator.

The present invention also relates to a computer program, computer program product and a storage medium for a computer all to be used with a computer for executing the method as described in any one of the above examples.

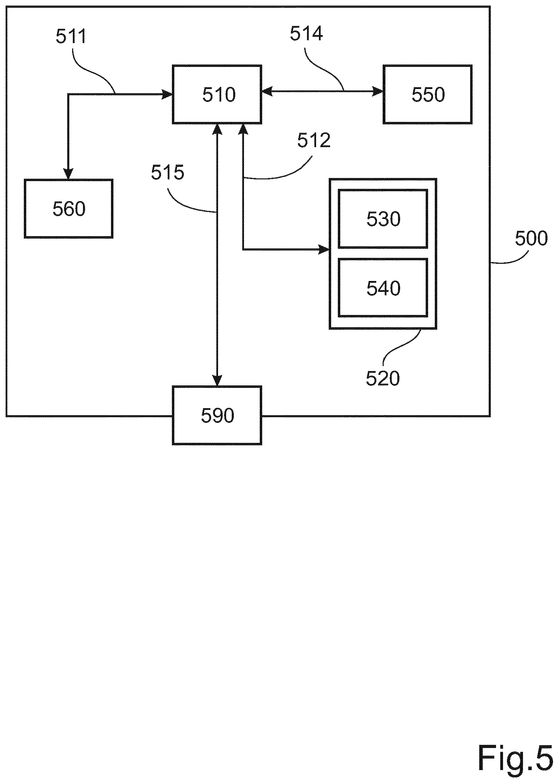

Figure 5 shows an apparatus according to one embodiment of the invention, comprising a non-volatile memory 520, a processor 510 and a read and write memory 560. The non-volatile memory 520 has a first memory part 530, in which a computer program for controlling the apparatus 500 is stored. The computer program in the memory part 530 for controlling the apparatus 500 can be an operating system.

The apparatus can be enclosed in, for example, a control unit, such as the control unit 500. The data-processing unit 510 can comprise, for example, a microcomputer. The memory 520 also has a second memory part 540, in which a program for controlling the target gear selection function according to the invention is stored. In an alternative embodiment, the program for controlling the transmission is stored in a separate non-volatile storage medium 550 for data, such as, for example, a CD or an exchangeable semiconductor memory. The program can be stored in an executable form or in a compressed state.

When it is stated below that the data-processing unit 510 runs a specific function, it should be clear that the data-processing unit 510 is running a specific part of the program stored in the memory 540 or a specific part of the program stored in the non-volatile storage medium 520.

The data-processing unit 510 is tailored for communication with the storage memory 550 through a data bus 514. The data-processing unit 510 is also tailored for communication with the memory 520 through a data bus 5100. In addition, the data-processing unit 510 is tailored for communication with the memory 560 through a data bus 511. The data-processing unit 510 is also tailored for communication with a data port 590 by the use of a data bus 515.

## Claims

1. Method to automatically navigate and control a marine vessel comprising a navigator unit (110) and propulsion system (101), and comprising:
- an operator selecting a desired destination for the navigator unit;
- retrieving fairway data for at least one fairway (F; F₁, F₂) between a current position (P₁) and the desired destination (P₂), which at least one fairway (F; F₁, F₂) has a centreline (C_{L}) and a pair of outer boundaries (B₁, B₁'; B₂, B₂');
- the operator selecting a desired lateral position (X₁; X₂) of the vessel within the at least one fairway (F; F₁, F₂) to be travelled;
- calculating a route (R₁; R₂; R₃; R₄) to reach the desired destination (P₂) in the navigator, using the desired lateral position (X₁; X₂) of the vessel within the at least one fairway (F; F₁, F₂); and
- controlling the propulsion system to reach the destination using the navigator unit; **characterized in that** the method comprises selecting a minimum desired depth, calculating a route using depth contour data from the retrieved fairway data, and controlling the vessel to deviate from the desired lateral position (X₁; X₂) within the fairway (F) if required by the depth contour data.

2. A method to automatically navigate and control a marine vessel according to claim 1, wherein the desired lateral position (X₁; X₂) within the fairway is determined by the operator selecting which side of the centreline (C_{L}) of the fairway to travel and selecting a lateral distance from a corresponding outer boundary (B₁, B₁'; B₂, B₂') of the fairway (F; F₁, F₂).

3. A method to automatically navigate and control a marine vessel according to claim 2, wherein the method involves warning the operator if the distance between the desired lateral position (X₁; X₂) and the outer boundary (B₁, B₁'; B₂, B₂') exceeds the distance between the centreline (C_{L}) and the outer boundary (B₁, B₁'; B₂, B₂') at any point along the calculated a route (R₁; R₂; R₃; R₄).

4. A method to automatically navigate and control a marine vessel according to claim 1, wherein the desired lateral position (X₁; X₂) within the fairway is determined by the operator selecting which side (L₁; L₂) of the fairway to follow and selecting a distance from the centreline (C_{L}) of the fairway.

5. A method to automatically navigate and control a marine vessel according to claim 4, wherein the method involves warning the operator if the distance between the desired lateral position (X₁; X₂) and the centreline (C_{L}) exceeds the distance between the centreline (C_{L}) and the outer boundary (B₁, B₁'; B₂, B₂') at any point along the calculated a route (R₁; R₂; R₃; R₄).

6. A method to automatically navigate and control a marine vessel according to any one of claims 1-5, wherein the method involves preventing the vessel from crossing the centreline (C_{L}) when a deviation from the selected lateral position occurs.

7. A method to automatically navigate and control a marine vessel according to any previous claim, wherein the method involves allowing the vessel to cross the centreline (C_{L}) if the depth indicated by the depth contour data is less than the minimum desired depth.

8. A method to automatically navigate and control a marine vessel according to any one of the above claims, wherein the navigator unit uses detected or manually input vessel draft data for calculating the route.

9. A method to automatically navigate and control a marine vessel according to any one of the above claims, where it is determined that fairway data is unavailable for a section (S) of the calculated route (R4), wherein the method involves setting a minimum desired depth, retrieving depth data from an on-board (110) and/or off-board source (114) and controlling the vessel to follow the calculated route towards a subsequent fairway along the calculated route and to deviate from the calculated route if required by the depth data.

10. Marine vessel comprising a navigator unit and propulsion system, which vessel is operated using the method according to claim 1.

11. A computer program comprising program code means for performing the method according to claim 1 when said program is run on a computer.

12. A computer program product comprising program code means stored on a computer readable medium for performing the method according to claim 1 when said program product is run on a computer.

## Patentansprüche

1. Verfahren zum automatischen Navigieren und Steuern eines Wasserfahrzeugs, das eine Navigationseinheit (110) und ein Antriebssystem (101) umfasst, und Folgendes umfassend:
- einen Bediener, der ein gewünschtes Ziel für die Navigationseinheit auswählt;
- Abrufen von Fahrwasserdaten für mindestens ein Fahrwasser (F; F₁, F₂) zwischen einer aktuellen Position (P₁) und dem gewünschten Ziel (P₂), wobei das mindestens eine Fahrwasser (F; F₁, F₂) eine Mittellinie (C_{L}) und ein Paar von Außengrenzen (B₁, B₁'; B₂, B₂') aufweist;
- wobei der Bediener eine gewünschte seitliche Position (X₁; X₂) des Fahrzeugs innerhalb des mindestens einen zu befahrenden Fahrwassers (F; F₁, F₂) auswählt;
- Berechnen einer Route (R₁; R₂; R₃; R₄) zum Erreichen des gewünschten Ziels (P₂) in der Navigationseinheit unter Verwendung der gewünschten seitlichen Position (X₁; X₂) des Fahrzeugs innerhalb des mindestens einen Fahrwassers (F; F₁, F₂); und
- Steuern des Antriebssystems, um das Ziel unter Verwendung der Navigationseinheit zu erreichen;
**dadurch gekennzeichnet, dass** das Verfahren Auswählen einer gewünschten Mindesttiefe, Berechnen einer Route unter Verwendung von Tiefenkonturdaten aus den abgerufenen Fahrwasserdaten und Steuern des Fahrzeugs, um von der gewünschten seitlichen Position (X₁; X₂) innerhalb des Fahrwassers (F) abzuweichen, falls dies durch die Tiefenkonturdaten gefordert wird, umfasst.

2. Verfahren zum automatischen Navigieren und Steuern eines Wasserfahrzeugs nach Anspruch 1, wobei die gewünschte seitliche Position (X₁; X₂) innerhalb des Fahrwassers durch den Bediener bestimmt wird, der auswählt, auf welcher Seite der Mittellinie (C_{L}) des Fahrwassers zu fahren ist, und der einen seitlichen Abstand von einer entsprechenden Außengrenze (B₁, B₁'; B₂, B₂') des Fahrwassers (F; F₁, F₂) auswählt.

3. Verfahren zum automatischen Navigieren und Steuern eines Wasserfahrzeugs nach Anspruch 2, wobei das Verfahren Warnen des Bedieners beinhaltet, wenn der Abstand zwischen der gewünschten seitlichen Position (X₁; X₂) und der Außengrenze (B₁, B₁'; B₂, B₂') den Abstand zwischen der Mittellinie (C_{L}) und der Außengrenze (B₁, B₁'; B₂, B₂') an irgendeinem Punkt entlang der berechneten Route (R₁; R₂; R₃; R₄) überschreitet.

4. Verfahren zum automatischen Navigieren und Steuern eines Wasserfahrzeugs nach Anspruch 1, wobei die gewünschte seitliche Position (X₁; X₂) innerhalb des Fahrwassers durch den Bediener bestimmt wird, der auswählt, welcher Seite (L₁; L₂) des Fahrwassers zu folgen ist, und der einen Abstand von der Mittellinie (C_{L}) des Fahrwassers auswählt.

5. Verfahren zum automatischen Navigieren und Steuern eines Wasserfahrzeugs nach Anspruch 4, wobei das Verfahren Warnen des Bedieners beinhaltet, wenn der Abstand zwischen der gewünschten seitlichen Position (X₁; X₂) und der Mittellinie (C_{L}) den Abstand zwischen der Mittellinie (C_{L}) und der Außengrenze (B₁, B₁'; B₂, B₂') an irgendeinem Punkt entlang der berechneten Route (R₁; R₂; R₃; R₄) überschreitet.

6. Verfahren zum automatischen Navigieren und Steuern eines Wasserfahrzeugs nach einem der Ansprüche 1-5, wobei das Verfahren Verhindern von Überqueren der Mittellinie (C_{L}) durch das Fahrzeug, wenn eine Abweichung von der ausgewählten seitlichen Position auftritt, beinhaltet.

7. Verfahren zum automatischen Navigieren und Steuern eines Wasserfahrzeugs nach einem der vorangehenden Ansprüche, wobei das Verfahren Erlauben von Überqueren der Mittellinie (C_{L}) durch das Fahrzeug, wenn die Tiefe, die durch die Tiefenkonturdaten angezeigt wird, geringer ist als die gewünschte Mindesttiefe, beinhaltet.

8. Verfahren zum automatischen Navigieren und Steuern eines Wasserfahrzeugs nach einem der vorangehenden Ansprüche, wobei die Navigationseinheit erfasste oder manuell eingegebene Fahrzeug-Tiefgangsdaten zum Berechnen der Route verwendet.

9. Verfahren zum automatischen Navigieren und Steuern eines Wasserfahrzeugs nach einem der vorangehenden Ansprüche, bei dem ermittelt wird, dass für einen Abschnitt (S) der berechneten Route (R4) keine Fahrwasserdaten verfügbar sind, wobei das Verfahren Einstellen einer gewünschten Mindesttiefe, Abrufen von Tiefendaten von einer an Bord befindlichen (110) und/oder externen Quelle (114) und Steuern des Fahrzeugs, um der berechneten Route in Richtung eines nachfolgenden Fahrwassers entlang der berechneten Route zu folgen und von der berechneten Route abzuweichen, falls die Tiefendaten dies erfordern, beinhaltet.

10. Wasserfahrzeug, umfassend eine Navigationseinheit und ein Antriebssystem, wobei das Fahrzeug unter Verwendung des Verfahrens nach Anspruch 1 betrieben wird.

11. Computerprogramm, umfassend Programmcodemittel zum Durchführen des Verfahrens nach Anspruch 1, wenn das Programm auf einem Computer ausgeführt wird.

12. Computerprogrammprodukt, umfassend Programmcodemittel, die auf einem computerlesbaren Medium gespeichert sind, zum Durchführen des Verfahrens nach Anspruch 1, wenn das Programmprodukt auf einem Computer ausgeführt wird.

## Revendications

1. Procédé de navigation et de commande automatiques d'un navire marin comprenant une unité de navigation (110) et un système de propulsion (101), et comprenant :
- un opérateur sélectionnant une destination souhaitée pour l'unité de navigation ;
- la récupération de données de chenal pour au moins un chenal (F ; F₁, F₂) entre une position actuelle (P₁) et la destination souhaitée (P₂), lequel au moins un chenal (F ; F₁, F₂) possède une ligne médiane (C_{L}) et une paire de limites extérieures (B₁, B₁' ; B₂, B₂') ;
- l'opérateur sélectionnant une position latérale souhaitée (X₁ ; X₂) du navire marin dans l'au moins un chenal (F ; F₁, F₂) à parcourir ;
- le calcul d'un itinéraire (R₁ ; R₂ ; R₃ ; R₄) pour atteindre la destination souhaitée (P₂) dans le navigateur, en utilisant la position latérale souhaitée (X₁ ; X₂) du navire marin dans au moins un chenal (F ; F₁, F₂) ; et
- la commande du système de propulsion pour atteindre la destination à l'aide de l'unité de navigation ;
**caractérisé en ce que** le procédé comprend la sélection d'une profondeur minimale souhaitée, le calcul d'un itinéraire à l'aide de données de contour de profondeur à partir des données de chenal récupérées, et la commande du navire marin pour s'écarter de la position latérale souhaitée (X₁ ; X₂) dans le chenal (F) si requis par les données de contour de profondeur.

2. Procédé de navigation et de commande automatiques d'un navire marin selon la revendication 1, dans lequel la position latérale souhaitée (X₁ ; X₂) dans le chenal est déterminée par l'opérateur sélectionnant le côté de la ligne médiane (C_{L}) du chenal à parcourir et sélectionnant une distance latérale à partir d'une limite extérieure correspondante (B₁, B₁' ; B₂, B₂') du chenal (F ; F₁, F₂).

3. Procédé de navigation et de commande automatiques d'un navire marin selon la revendication 2, dans lequel le procédé consiste à avertir l'opérateur si la distance entre la position latérale souhaitée (X₁ ; X₂) et la limite extérieure (B₁, B₁' ; B₂, B₂') dépasse la distance entre la ligne médiane (C_{L}) et la limite extérieure (B₁, B₁' ; B₂, B₂') à n'importe quel point le long de l'itinéraire calculé (R₁ ; R₂ ; R₃ ; R₄) .

4. Procédé de navigation et de commande automatiques d'un navire marin selon la revendication 1, dans lequel la position latérale souhaitée (X₁ ; X₂) dans le chenal est déterminée par l'opérateur sélectionnant le côté (L₁ ; L₂) du chenal à suivre et sélectionnant une distance par rapport à la ligne médiane (C_{L}) du chenal.

5. Procédé de navigation et de commande automatiques d'un navire marin selon la revendication 4, dans lequel le procédé consiste à avertir l'opérateur si la distance entre la position latérale souhaitée (X₁ ; X₂) et la ligne médiane (C_{L}) dépasse la distance entre la ligne médiane (C_{L}) et la limite extérieure (B₁, B₁' ; B₂, B₂') à n'importe quel point le long de l'itinéraire calculé (R₁ ; R₂ ; R₃ ; R₄) -

6. Procédé de navigation et de commande automatiques d'un navire marin selon l'une quelconque des revendications 1 à 5, dans lequel le procédé consiste à empêcher le navire marin de traverser la ligne médiane (C_{L}) lorsqu'un écart par rapport à la position latérale sélectionnée se produit.

7. Procédé de navigation et de commande automatiques d'un navire marin selon l'une quelconque des revendications précédentes, dans lequel le procédé consiste à permettre au navire marin de traverser la ligne médiane (C_{L}) si la profondeur indiquée par les données de contour de profondeur est inférieure à la profondeur minimale souhaitée.

8. Procédé de navigation et de commande automatiques d'un navire marin selon l'une quelconque des revendications ci-dessus, dans lequel l'unité de navigation utilise des données de tirant d'eau du navire marin détectées ou saisies manuellement pour calculer l'itinéraire.

9. Procédé de navigation et de commande automatiques d'un navire marin selon l'une quelconque des revendications ci-dessus, dans lequel il est déterminé que des données de chenal ne sont pas disponibles pour une section (S) de l'itinéraire calculé (R4), le procédé consistant à définir une profondeur minimale souhaitée, à récupérer des données de profondeur à partir d'une source embarquée (110) et/ou hors-bord (114) et à commander le navire marin pour qu'il suive l'itinéraire calculé vers un chenal ultérieur le long de l'itinéraire calculé et pour qu'il s'écarte de l'itinéraire calculé si les données de profondeur l'exigent.

10. Navire marin comprenant une unité de navigation et un système de propulsion, lequel navire marin est exploité en utilisant le procédé selon la revendication 1.

11. Programme informatique comprenant des moyens de code de programme pour exécuter le procédé selon la revendication 1 lorsque ledit programme est exécuté sur un ordinateur.

12. Produit de programme informatique comprenant des moyens de code de programme stockés sur un support lisible par ordinateur pour exécuter le procédé selon la revendication 1 lorsque ledit produit de programme est exécuté sur un ordinateur.
